# EUROPEAN PATENT SPECIFICATION

(11) **EP 3 023 871 B1**
(45) Date of publication and mention of the grant of the patent: **13.03.2019**
(21) Application number: 15195542.4
(22) Date of filing: 20.11.2015
(51) Int. Cl.: G06F 3/0481, G06F 3/0484, G06F 9/44

(54) **DEVICE FOR RESIZING WINDOW, AND METHOD OF CONTROLLING THE DEVICE TO RESIZE WINDOW**
VORRICHTUNG ZUR FENSTERGRÖSSENANPASSUNG UND VERFAHREN ZUR STEUERUNG DER VORRICHTUNG ZUR FENSTERGRÖSSENANPASSUNG
DISPOSITIF POUR REDIMENSIONNEMENT DE FENÊTRE ET PROCÉDÉ DE COMMANDE DU DIT DISPOSITIF

(30) Priority: 20.11.2014 KR 20140162606
(43) Date of publication of application: 25.05.2016
(73) Proprietor: Samsung Electronics Co., Ltd., Gyeonggi-do 16677 (KR)
(72) Inventor: BYUN, Kwang-sub, Gyeonggi-do (KR)
(74) Representative: Appleyard Lees IP LLP

(56) References cited:
- CA-A1- 2 576 592
- US-A- 5 513 342
- US-A1- 2006 253 796
- US-A1- 2008 163 098
- US-A1- 2011 148 931
- US-A1- 2014 168 274
- US-B1- 6 473 102
- Dan Heller ET AL: "Motif Programming Manual for OSF/Motif Release 1.2 - Volume Six A - Chapter 4 Overview of the Motif Toolkit" In: "Motif Programming Manual for OSF/Motif Release 1.2 - Volume Six A - Chapter 4 Overview of the Motif Toolkit", 30 September 1993 (1993-09-30), O'Reilly & Associates, Inc., XP055258599, ISBN: 978-1-56592-016-3 pages 43-80, * page 52, line 5, paragraph 4.3 - line 8, paragraph 4.3 * * page 63, line 5, paragraph 4.4.3 - line 8, paragraph 4.4.3 *
- Don Stewart: "xmonad tour : take 1", You Tube, 14 September 2008 (2008-09-14), pages 1-2, XP054978108, Retrieved from the Internet: URL:https://youtu.be/4dyoLS-zOgE [retrieved on 2018-02-15]
- Don Stewart: "https://youtu.be/LN4Ov6ZLcrI", You Tube, 15 September 2008 (2008-09-15), page 1, XP054978107, Retrieved from the Internet: URL:https://youtu.be/LN4Ov6ZLcrI [retrieved on 2018-02-15]
- Joe Di Castro: "Xmonad + Unity 2D", You Tube, 5 December 2011 (2011-12-05), pages 1-2, XP054978109, Retrieved from the Internet: URL:https://vimeo.com/33164152 [retrieved on 2018-02-15]

## Description

### BACKGROUND

### 1. Field

The present disclosure relates to devices for resizing a window and methods of controlling the devices, and more particularly, to a device and method of resizing a window based on the size of an object displayed on the window and displaying a resized window.

### 2. Description of the Related Art

As various terminals such as personal computers (PCs), laptop computers, smart TVs, and cellular phones provide multiple and various functions, there is a trend to providing a multi-window function. The multi-window function means a function of splitting a screen into a plurality of areas and independently displaying a plurality of pieces of content or application programs simultaneously.

US 6,473,102 B1 describes resizing a window to permit components to be visible. US 2006/0253796 A1 describes resizing a window based on a content to display. US 5,513,342 A describes resizing a window in accordance with window environment changes. US 2008/163098 A1 describes resizing a window to accommodate a volume of data for display. CA 2,576,592 A1 describes resizing a window to accommodate content. US 2014/168274 A1 describes adjusting a font size of a text displayed.

The book "Motif Programming Manual for OSF/Motif Release 1.2 - Volume Six A" by Dan Heller et al., 30 September 1993, O'Reilly & Associates, Inc., ISBN 978-1-56592-016-3 describes the Motif windowing system.

The xmonad tiling window manager is shown in videos available at the following URLs: https:// youtu.be/4dyoLS-zOgE ; https://youtu.be/LN40v6ZLcrl; https://vimeo.com/33164152

US 2011/148931 A1 describes an apparatus and method wherein text size is adjusted based on user's eyesight and distance.

There is a recent need for research into a method in which a terminal providing the multi-window function provides a user with a more convenient viewing environment.

### SUMMARY

It is one object of the invention, amongst others, to provide devices and methods that allow windows displayed on a display of a device to be resized in order to permit a user to read or recognize objects such as text, symbols or icons (e.g. for executing applications) within the window.

According to the present invention there is provided an apparatus and method as set forth in the appended claims. Other features of the invention will be apparent from the dependent claims, and the description which follows.

Provided are devices and methods of resizing a window based on the size of an object displayed on the window and displaying a resized window.

Additional aspects will be set forth in part in the description which follows and, in part, will be apparent from the description, or may be learned by practice of the presented exemplary embodiments.

Additional aspects will be set forth in part in the description which follows and, in part, will be apparent from the description, or may be learned by practice of the presented exemplary embodiments.

According to an aspect of the present invention, a device includes a display configured to display a plurality of windows; and a processor configured to determine one of the plurality of windows as a target window, determine at least a partial area for acquiring a size of an object displayed in the target window, acquire a size of an object included in the determined at least partial area, resize the target window based on the size of the object, and display the resized target window.

Throughout the specification, term 'target window' means a window that is determined to be resized from among a plurality of windows that are provided in a multi-window environment. The target window does not indicate a fixed specific window from among the plurality of windows but indicates any window that is to be controlled to be resized by the device.

The device may determine one of the plurality of windows as a target window according to a predetermined criterion. Alternatively, the target window may be determined according to a user input.

The term "device" may refer to fixed terminals, such as a digital TV and a desktop computer, and mobile terminals, such as a smartphone, a tablet personal computer (PC), a laptop computer, a digital broadcasting terminal, a personal digital assistant (PDA), a portable multimedia player (PMP), and a navigation device. However, a preferred device is a TV display apparatus.

Throughout the specification, term 'object' means an object that is displayed on the screen of the display. For example, 'object' may mean, for example, text, a symbol, or an image included in the screen image for executing a certain application. In particular, the object referred to may be the smallest size of text, symbol or icon found in the at least partial era of the target window, such that the resizing of the target window permits the user to read or recognize the object.

When the size of the object is less than a preset reference, the processor may enlarge the size of the target window and display the size-enlarged target window, and, when the size of the object is greater than the preset reference, the processor may reduce the size of the target window and display the size-reduced target window.

The processor may determine the target window, based on a user input of selecting one from among the plurality of windows.

The processor may determine the at least partial area for acquiring the size of the object, based on an area including text in the target window.

The processor may change a position or a size of the at least partial area for acquiring the size of the object, based on a user input.

When the position or size of the at least partial area for acquiring the size of the object has been changed, the processor may reacquire the size of the object.

The processor may determine a center area corresponding to a predetermined ratio within the target window, as the at least partial area for acquiring the size of the object.

The processor may control an indicator indicating the at least partial area for acquiring the size of the object, to be displayed in the target window.

The processor may acquire the size of text included in the determined at least partial area, or recognize text from an image included in the determined at least partial area and then acquire a size of the recognized text. In this case the object may be text and the size of the object may be a font size, for instance a minimum font size within the at least partial area selected.

The processor may acquire the size of the object, based on a predetermined time interval.

The processor may automatically determine whether to resize the target window, according to the size of the object acquired based on the predetermined time interval. For instance, if a target window is selected, and there is no user input within a predetermined time interval, the resizing may occur automatically once the predetermined time interval has elapsed, or may not occur unless there is user input within the predetermined time interval.

The processor may receive a user input regarding whether to resize the target window, according to the size of the object acquired based on the predetermined time interval. For instance the resizing may be cancelled or initiated by a user input within the predetermined time interval.

The processor may determine a ratio for resizing the target window, based on preset user information, and the preset user information may include at least one of age information, eyesight information, and size information of a preferred window.

The device may further include a sensing unit configured to acquire a distance by which a user is away from the device. The processor may determine a ratio for resizing the target window, based on the distance.

As the processor resizes the target window, the processor may resize windows other than the target window from among the plurality of windows displayed on the display.

According to an aspect of the present invention, a method includes determining as a target window one of a plurality of windows displayed on a display; determining at least a partial area for acquiring a size of an object displayed in the target window; acquiring a size of an object included in the determined at least partial area; and resizing the target window based on the size of the object and displaying the resized target window.

The resizing of the target window based on the size of the object and displaying of the resized target window may include, when the size of the object is less than a preset reference, enlarging the size of the target window and displaying the size-enlarged target window, and, when the size of the object is greater than the preset reference, reducing the size of the target window and displaying the size-reduced target window.

The determining as the target window may include determining the target window, based on a user input of selecting one from among the plurality of windows.

The determining of the at least partial area for acquiring the size of the object may include determining the at least partial area for acquiring the size of the object, based on an area including text in the target window. For instance the object may be text and the size may be the font size.

The determining of the at least partial area for acquiring the size of the object may include changing a position or a size of the at least partial area for acquiring the size of the object, based on a user input.

The method may further include, when the position or size of the at least partial area for acquiring the size of the object has been changed, reacquiring the size of the object.

The determining of the at least partial area for acquiring the size of the object may include determining a center area corresponding to a predetermined ratio within the target window, as the at least partial area for acquiring the size of the object.

The method may further include displaying an indicator indicating the at least partial area for acquiring the size of the object, in the target window.

The acquiring of the size of the object may include acquiring the size of text included in the determined at least partial area, or recognizing text from an image included in the determined at least partial area and then acquiring a size of the recognized text.

The acquiring of the size of the object may include acquiring the size of the object, based on a predetermined time interval.

The acquiring of the size of the object may include automatically determining whether to resize the target window, according to the size of the object acquired based on the predetermined time interval.

The acquiring of the size of the object may include receiving a user input regarding whether to resize the target window, according to the size of the object acquired based on the predetermined time interval.

The resizing of the target window based on the size of the object and displaying of the resized target window may include determining a ratio for resizing the target window, based on preset user information, and the preset user information may include at least one of age information, eyesight information, and size information of a preferred window.

The resizing of the target window based on the size of the object and displaying of the resized target window may include acquiring a distance by which a user is away from the device, and determining a ratio for resizing the target window, based on the distance.

The method may further include, as the target window is resized, resizing windows other than the target window from among the plurality of windows displayed on the display.

### BRIEF DESCRIPTION OF THE DRAWINGS

For a better understanding of the invention, and to show how embodiments of the same may be carried into effect, reference will now be made, by way of example, to the accompanying diagrammatic drawings in which:
These and/or other aspects will become apparent and more readily appreciated from the following description of the exemplary embodiments, taken in conjunction with the accompanying drawings in which:
FIG. 1 illustrates an exemplary embodiment of the present invention;
FIG. 2 is a flowchart for explaining an exemplary embodiment of the present invention;
FIG. 3 is a view for explaining an example of determining a target window, according to an exemplary embodiment of the present invention;
FIG. 4 is a view for explaining an example of determining an area for acquiring the size of an object, according to an exemplary embodiment of the present invention;
FIG. 5 is a view for explaining another example of determining an area for acquiring the size of an object, according to an exemplary embodiment of the present invention;
FIG. 6 is a flowchart for explaining an example of resizing a target window, according to an exemplary embodiment of the present invention;
FIGS. 7 and 8 are views for explaining an example of resizing a target window, according to an exemplary embodiment of the present invention;
FIG. 9 is a flowchart for explaining an example of periodically determining whether to resize a target window, according to an exemplary embodiment of the present invention;
FIG. 10 is a view for explaining an example of periodically determining whether to resize a target window, according to an exemplary embodiment of the present invention;
FIG. 11 is a view for explaining an example of determining a resizing ratio of a target window, according to an exemplary embodiment of the present invention;
FIG. 12 is a view for explaining an example of rearranging windows other than a target image according to resizing of the target window, according to an exemplary embodiment of the present invention; and
FIGS. 13 and 14 are block diagrams of the device 100 according to an exemplary embodiment of the present invention.

### DETAILED DESCRIPTION

Exemplary embodiments of the present invention are described in detail herein with reference to the accompanying drawings so that this disclosure may be easily performed by one of ordinary skill in the art to which the present invention pertains. The invention may, however, be embodied in many different forms and should not be construed as being limited to the exemplary embodiments set forth herein. In the drawings, parts irrelevant to the description are omitted for simplicity of explanation, and like numbers refer to like elements throughout.

The above-described objectives, features, and merits of the present invention will be more apparent via the following detailed description in connection with the accompanying drawings. As the invention allows for various changes and numerous embodiments, particular exemplary embodiments will be illustrated in the drawings and described in detail in the written description. Like reference numerals in the drawings basically denote like elements. In the description of the present invention, certain detailed explanations of related-art functions or structures are omitted when it is deemed that they may unnecessarily obscure the essence of the invention. While such terms as "first," "second," etc., may be used to describe various components, such components must not be limited to the above terms. The above terms are used only to distinguish one component from another.

Devices associated with the present invention will now be described in more detail with reference to the accompanying drawings. Terms such as "...unit" and "... module," are used in the following description in consideration of only ease of drafting of the specification, and thus do not have distinct meanings or roles in themselves.

Examples of a device described in the specification may include, but are not limited to, fixed terminals, such as a digital TV and a desktop computer, and mobile terminals, such as a smartphone, a tablet personal computer (PC), a laptop computer, a digital broadcasting terminal, a personal digital assistant (PDA), a portable multimedia player (PMP), and a navigation device.

Throughout the specification, when an element is referred to as being "connected" or "coupled" to another element, it can be directly connected or coupled to the other element, or can be electrically connected or coupled to the other element with intervening elements interposed therebetween. In addition, the terms "comprises" and/or "comprising" or "includes" and/or "including" when used in this specification, specify the presence of stated elements, but do not preclude the presence or addition of one or more other elements. As used herein, the term "and/or" includes any and all combinations of one or more of the associated listed items. Expressions such as "at least one of," when preceding a list of elements, modify the entire list of elements and do not modify the individual elements of the list.

Hereinafter, terms used in the specification are briefly described.

A display 121 of a device 100 according to an exemplary embodiment of the present invention may provide a multi-window function.

The multi-window function means a function of splitting a screen into a plurality of areas and independently displaying a plurality of pieces of content or application programs simultaneously.

Throughout the specification, term 'target window' means a window that is determined to be resized from among a plurality of windows that are provided in a multi-window environment. The target window does not indicate a fixed specific window from among the plurality of windows but indicates any window that is to be controlled to be resized by the device 100.

The device 100 may determine one of the plurality of windows as a target window according to a predetermined criterion. Alternatively, the target window may be determined according to a user input.

Throughout the specification, term 'object' means an object that is displayed on the screen of the display 121. For example, when a screen image for executing a certain application is displayed on the display 121, 'object' may mean, for example, text, a symbol, or an image included in the screen image for executing a certain application.

An exemplary embodiment of the present invention will now be described more fully with reference to the accompanying drawings, in which exemplary embodiments of the invention are shown.

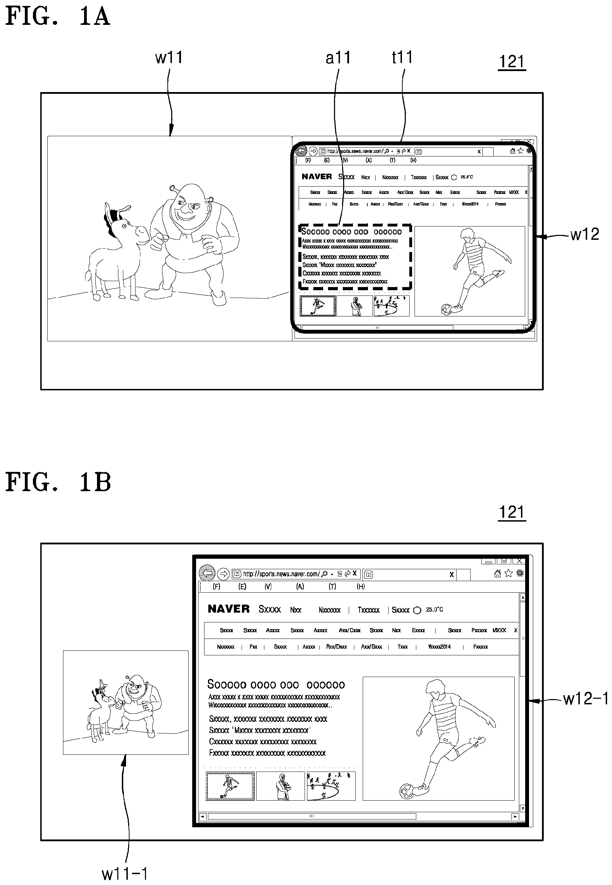

FIGs. 1A and 1B illustrate an exemplary embodiment of the present invention.

A device according to an exemplary embodiment of the present invention may provide a multi-window function including a plurality of windows. In order to enhance readability of content displayed in a window that a user is interested in from among the plurality of windows, the device may automatically enlarge or shrink the size of the window. For example, if the size of text displayed on the window that a user is interested in is too small for the user to read the text, the device increases the ability of the user to read, by enlarging the size of the window and displaying an enlarged window.

In other words, the user may more conveniently watch the window of interest without needing to directly set or change the size of each of the plurality of windows while watching the plurality of windows.

FIGs. 1A and 1B briefly illustrate an exemplary embodiment of the present invention. FIG. 1A illustrates an example in which a second window w12 from among a first window w11 and the second window w12 is determined as a target window, and FIG. 1B illustrates an enlarged target window.

In other words, when a device 100 according to an exemplary embodiment of the present invention acquires the size of text from a partial area a11 of the second window w12 determined as a target window and determines that the size of the text is too small for a user to read, the device 100 may enlarge the target window as illustrated in FIG. 1B.

The device 100 may display a frame-shaped indicator t11 that outlines a window and indicates that the outlined window is a target window. The frame-shaped indicator t11 is an example of the present invention, and thus may be displayed in various other shapes.

A dotted frame-shaped indicator a11 of FIG. 1A may indicate a target area for acquiring the size of an object (for example, text).

Although two windows are displayed on the display 121 in FIG. 1, a plurality of (for example, three or four) windows may be displayed on the display 121.

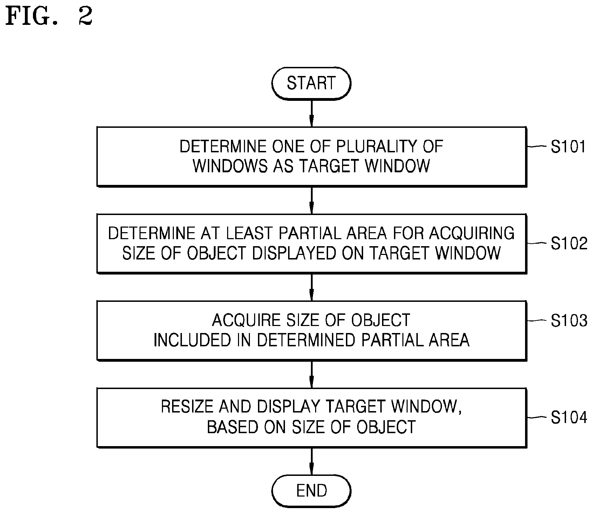

FIG. 2 is a flowchart for explaining an exemplary embodiment of the present invention.

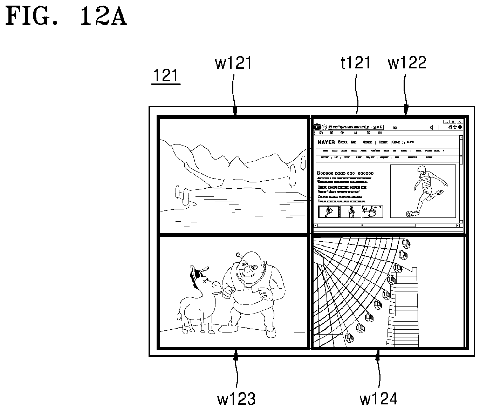

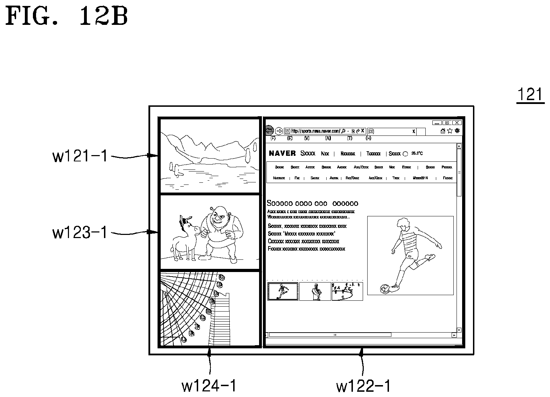

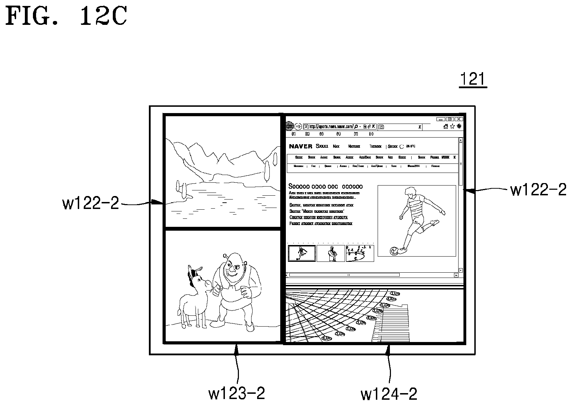

In operation S101, a processor 130 (see FIG. 12) of the device 100 may determine one of a plurality of windows as a target window.

The device 100 may automatically determine the target window according to a predetermined criterion. For example, the predetermined criterion may be a window that is disposed on a specific location (for example, a left upper portion of the display 121) or a window that has been the most recently set as a target window, but is not limited thereto.

Alternatively, the device 100 may determine the target window according to a user input signal of selecting a specific window. For example, when the user selects one from a plurality of windows displayed on a TV monitor by using a remote controller, the selected window may be determined as the target window.

In operation S102, the processor 130 of the device 100 may determine at least a partial area for acquiring the size of an object displayed on the target window.

For example, the processor 130 of the device 100 may determine an area where text is displayed at a predetermined percentage of the entire size of the target window or more, as the area for acquiring the size of the object, in order to acquire the size of the text displayed in the target window.

According to an exemplary embodiment of the present invention, the processor 130 of the device 100 may determine a center area corresponding to a predetermined percentage of the entire size of the target window within the target window, as the area for acquiring the size of the object. For example, the center area corresponding to the predetermined percentage may be an area that extends from the center of the target window by a quarter of the entire size of the target window.

According to an exemplary embodiment of the present invention, the processor 130 of the device 100 may determine an area selected by a user input, as the partial area for acquiring the size of the object.

In operation S103, the processor 130 of the device 100 may acquire the size of an object included in the area determined in operation S102.

For example, the processor 130 of the device 100 may acquire the size of text included in the determined area. The processor 130 of the device 100 may extract a font size from the text, or recognize text from an image included in the determined area and then extract a font size of the recognized text.

The processor 130 of the device 100 may extract the size of the image included in the determined area.

In operation S104, the processor 130 of the device 100 may resize and display the target window, based on the size of the object acquired in operation S103.

When the size of the object is less than a preset reference, the device 100 may enlarge and display the target window. When the size of the object is greater than the preset reference, the device 100 may reduce the size of the target window and display the size-reduced target window.

For example, when the size of text displayed on the target window is less than a preset minimum text size, the device 100 enlarges the size of the target window and thus a user may more conveniently check the text without directly adjusting the size of the target window.

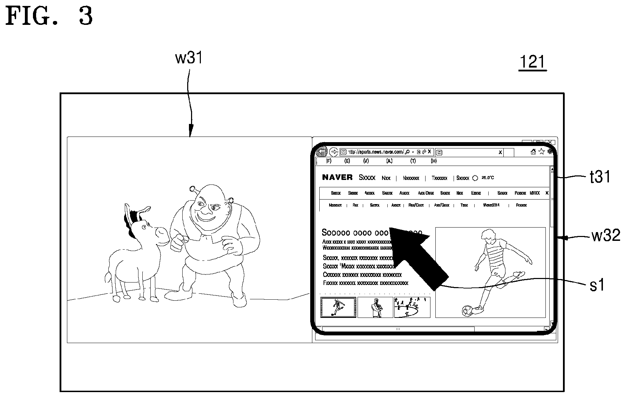

FIG. 3 is a view for explaining an example of determining a target window, according to an exemplary embodiment of the present invention.

According to an embodiment, the processor 130 of the device 100 may determine the target window, based on a user input of selecting one from among a plurality of windows.

For example, in response to a user input signal of selecting one from among a first window w31 and a second window w32 of FIG. 3, the device 100 may determine the selected window as the target window.

Referring to FIG. 3, in response to a user signal of moving a direction key or a pointer of a remote controller according to an operation of the remote controller, the device 100 (for example, a TV) may display and move a pointer s1 for selecting a target window, on the first window w31 and the second window w32.

A frame-shaped indicator t31 indicating that an indicated window is the target window may be displayed on the window pointed by the pointer s1.

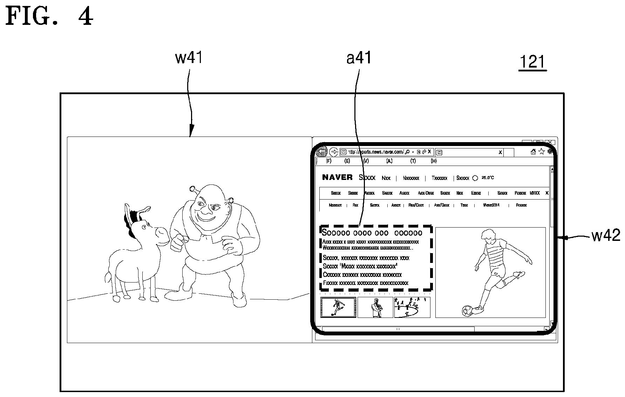

FIG. 4 is a view for explaining an example of determining an area for acquiring the size of an object, according to an exemplary embodiment of the present invention.

According to an exemplary embodiment, the processor 130 of the device 100 may determine the area for acquiring the size of an object, based on an area including text on a target window.

For example, in order to acquire the size of text displayed on the target window, the processor 130 of the device 100 may determine the area for acquiring the size of the object, based on an area on which a predetermined percentage or more of text is displayed. This determination means that the area for acquiring the size of the object is automatically determined based on an area including a high percentage of text.

Referring to FIG. 4, an indicator a41 indicating that an indicated area is the area for acquiring the size of the object may be displayed on a target window w42.

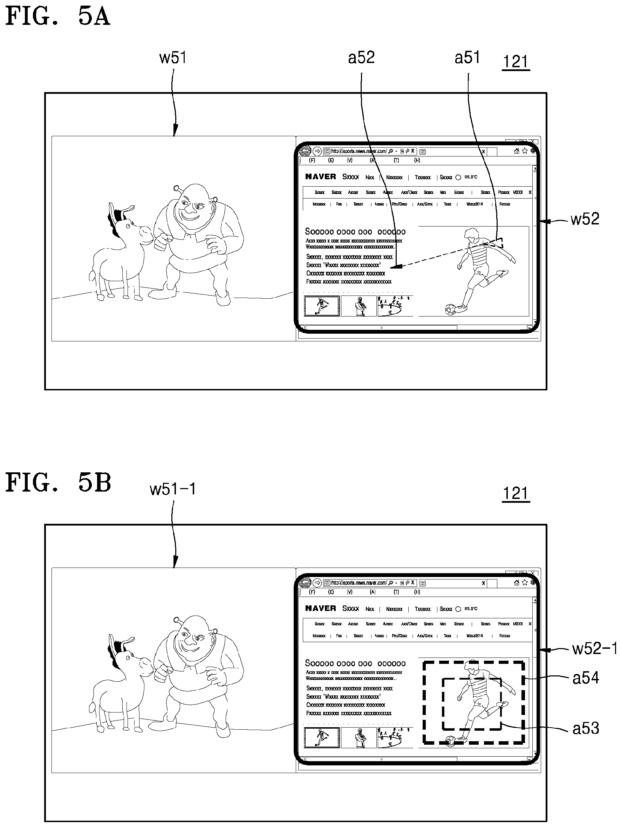

FIG. 5 is a view for explaining another example of determining an area for acquiring the size of an object, according to an exemplary embodiment of the present invention.

According to an exemplary embodiment, the processor 130 of the device 100 may change the position of the area for acquiring the size of an object, or resize the area, based on a user input. FIG. 5A illustrates an example of changing the position of the area, and FIG. 5B illustrates an example of resizing the area.

Referring to FIG. 5A, when the processor 130 of the device 100 receives an input signal of moving an indicator displayed on a target window w52 (for example, an input signal according to an operation of a remote controller of a user or a user touch input made on a touch screen), the processor 130 may move the indicator from an area on which a first indicator a51 is displayed to an area on which a second indicator a52 is displayed. For example, the indicator may be moved such that the area for acquiring the size of the object may be determined based on an area including text.

Referring to FIG. 5B, when the processor 130 of the device 100 receives an input signal of enlarging an indicator displayed on a target window w52-1 (for example, an input signal according to an operation of a remote controller of a user or a user touch input made on a touch screen), the processor 130 may enlarge the indicator from a size indicated by a third indicator a53 to a size indicated by a fourth indicator a54. For example, the size of the indicator may be enlarged by the size of an image displayed on the target window w52-1 such that the area for acquiring the size of the object may be determined based on an area including an image.

When the area for acquiring the size of the object is relocated or resized, the processor 130 of the device 100 may re-acquire the size of the object. In other words, the area for acquiring the size of the object may be changed, and, when the area is relocated or resized, the processor 130 of the device 100 may re-acquire the size of an object included in the changed area.

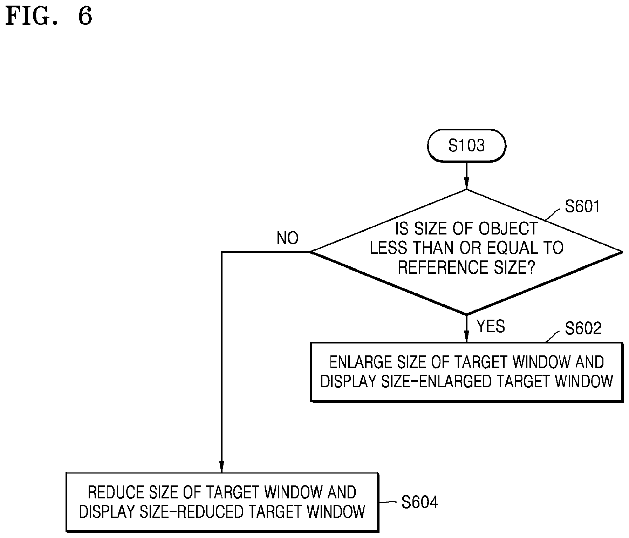

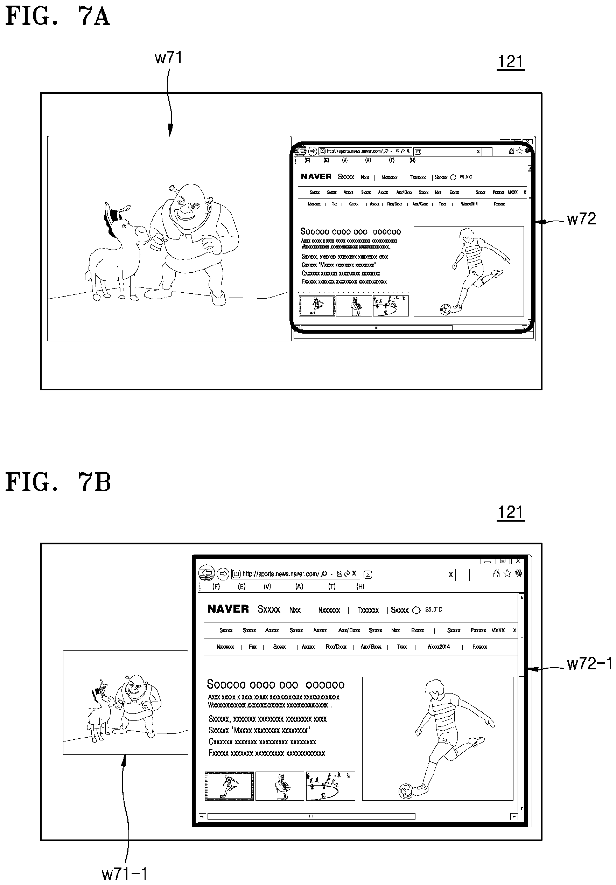

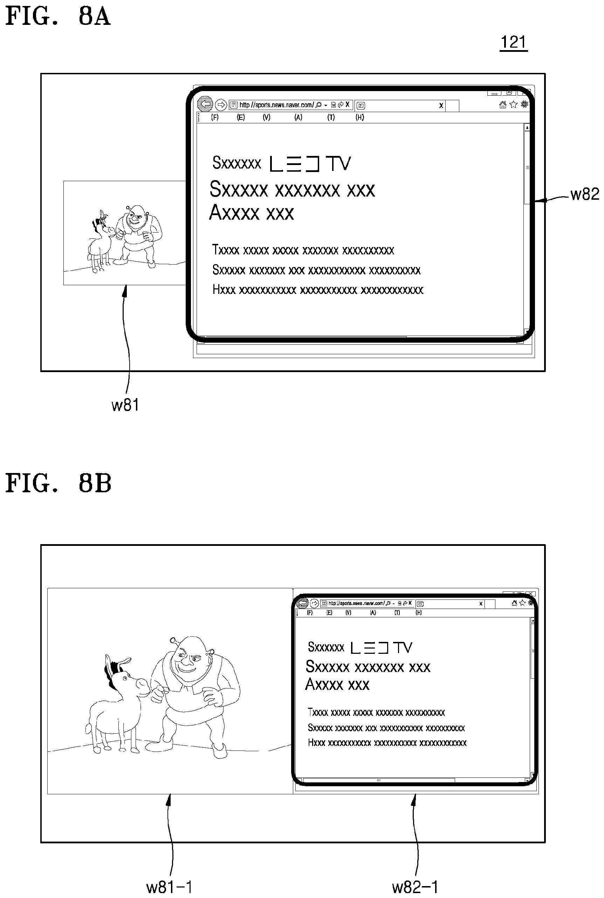

FIG. 6 is a flowchart for explaining an example of resizing a target window, according to an exemplary embodiment of the present invention. FIGS. 7 and 8 are views for explaining an example of resizing a target window, according to an exemplary embodiment of the present invention.

In operation S103 of FIG. 2, the processor 130 of the device 100 may acquire the size of an object (e.g., text) included in an area for acquiring the size of an object.

In operation S601 of FIG. 6, the processor 130 of the device 100 may determine whether the size of the object acquired in operation S103 is smaller than a predetermined reference.

In operation S602 of FIG. 6, when the processor 130 of the device 100 determines in operation S601 that the size of the object is smaller than the predetermined reference, the processor 130 of the device 100 may enlarge the size of the target window and display a size-enlarged target window. For example, when the size of text is smaller than a preset minimum font size or the size of an image is smaller than a preset minimum size, the device 100 may increase the ability of a user to read, by enlarging the size of the target window.

Referring to FIG. 7, the device 100 may display a target window w72-1 of FIG. 7A by enlarging a window w72 of FIG. 7A.

As the device 100 enlarges the size of the target window w72, the device 100 may reduce the size of a window w71 of FIG. 7A and thus display a window w71-1 of FIG. 7A.

In operation S601 of FIG. 6, the processor 130 of the device 100 may determine whether the size of the object is greater than the predetermined reference.

In operation S604 of FIG. 6, when the processor 130 of the device 100 determines in operation S603 that the size of the object is greater than the predetermined reference, the processor 130 of the device 100 may reduce the size of the target window and display a size-reduced target window.

For example, when the ability of a user to read may rather degrade due to an excessively large size of text, the size of a target window may be reduced.

Referring to FIG. 8, the device 100 may display a target window w82-1 of FIG. 8B by reducing the size of a window w82 of FIG. 8A.

As the device 100 reduces the size of the target window w82, the device 100 may enlarge the size of a window w81 of FIG. 8A and thus display a window w81-1 of FIG. 8B.

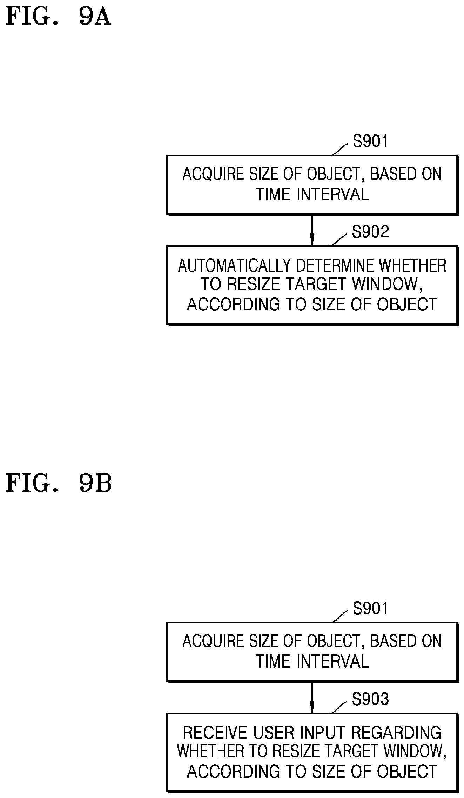

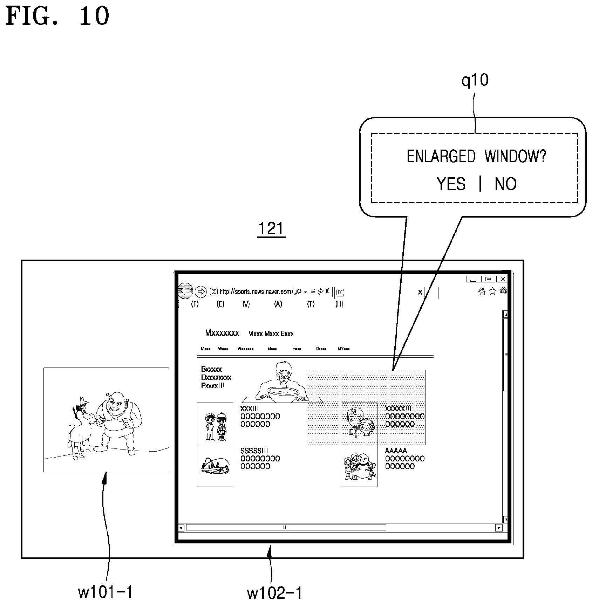

FIGs. 9A and 9B are flowcharts for explaining an example of periodically determining whether to resize a target window, according to an exemplary embodiment of the present invention. FIG. 10 is a view for explaining an example of periodically determining whether to resize a target window, according to an exemplary embodiment of the present invention.

According to an embodiment, the processor 130 of the device 100 may acquire the size of an object based on a predetermined time interval and resize a window according to a change in the size of the object. For example, when text displayed on an image screen for executing an application that is being executed on a target window is resized, the size of the target window may be adjusted such that a user may read the text without any inconvenience.

In operation S901 of FIG. 9A or 9B, the processor 130 of the device 100 may acquire the size of the object, based on the predetermined time interval.

In operation S902 of FIG. 9A, the processor 130 of the device 100 may automatically determine whether to resize the target window, according to the size of the object.

For example, when the device 100 determines that the size of the object is smaller than a predetermined reference, the device 100 may automatically enlarge the size of the target window. On the other hand, when the device 100 determines that the size of the object is greater than the predetermined reference, the device 100 may automatically reduce the size of the target window.

In other words, even after enlarging or reducing the size of the target window, the device 100 periodically acquires the size of text based on the predetermined time interval and resizes the target window according to the size of a resized text, thereby automatically providing a high ability to a user to read.

According to another exemplary embodiment, the processor 130 of the device 100 may enable a user to determine whether to resize the target window.

In operation S903 of FIG. 9B, the processor 130 of the device 100 may receive a user input regarding whether to resize the target window, according to the size of the object.

For example, when the device 100 acquires the size of an object based on the predetermined time interval and determines that the size of the object is smaller than the predetermined reference, the device 100 may receive a user input regarding whether to enlarge the size of the target window.

Referring to FIG. 10, when the device 100 determines that the size of text acquired from a target window w102-1 is smaller than the predetermined reference, the device 100 may display on the display 121 a pop-up window q10 for receiving a user input regarding whether to enlarge the size of the target window w102-1.

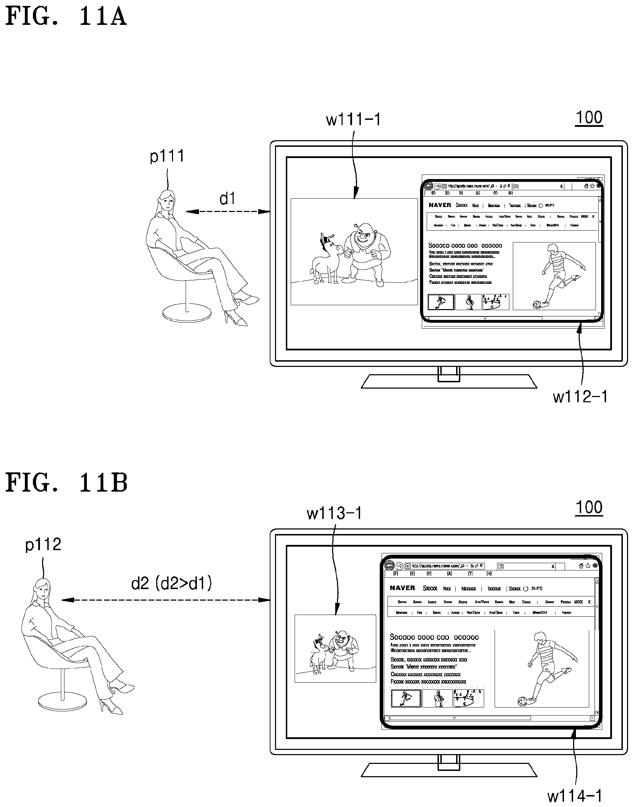

FIG. 11 is a view for explaining an example of determining a resizing ratio for a target window, according to an exemplary embodiment of the present invention.

According to an exemplary embodiment, the device 100 may determine a resizing ratio for a window according to a viewing distance of a user.

Referring to (a) and (b) of FIG. 11, when the user is distant from the device 100 (for example, a TV), the user may enlarge the size of the window more than when the user is close to the device 100, in order to secure the ability of the user to read.

When a distance d2 by which the device 100 is away from a user p112 in FIG. 11B is greater than a distance d1 by which the device 100 is away from a user p111 in FIG. 11A, an enlargement ratio of the size of a target window w114-1 of FIG. 11B may be greater than that of the size of a target window w112-1 of FIG. 11A.

The device 100 may include a sensing unit 140 for acquiring a distance by which a user is away from the device 100. The sensing unit 140 may include a camera, an infrared sensor, or the like.

For example, the device 100 may determine a distance by which a user is away from the device 100, via an image captured by a camera. The device 100 may recognize a user who is within a predetermined distance from the device 100, via an infrared sensor, and determine a distance by which the user is away from the device 100.

According to another exemplary embodiment, the device 100 may determine a resizing ratio for a target window, based on preset user information.

The user information may be, for example, age information of the user, eyesight information thereof, or size information of a window preferred by the user.

For example, when the user has a high age or bad eyesight, the device 100 may determine a high enlargement ratio for the target window.

The device 100 may determine an enlargement ratio for the target window according to size information of a preferred window that is preset by the user.

FIGs. 12A to 12C provide views for explaining an example of rearranging windows other than a target image according to resizing of the target window, according to an exemplary embodiment of the present invention.

According to an embodiment, as the device 100 resizes a target window, the device 100 may resize windows other than the target window from among a plurality of windows displayed on the display 121.

Referring to FIGs. 12A and 12B, as a target window w122 is enlarged to form a window w122-1, remaining windows w121, w123, and w124 may be reduced in size and rearranged as windows w121-1, w123-1, and w124-1.

Referring to Fig. 12C, as the target window w122 is enlarged to form a window w122-2, the remaining windows w121, w123, and w124 may be reduced in size and rearranged as windows w121-2, w123-2, and w124-2.

The aforementioned exemplary embodiments should be considered in a descriptive sense only and not for purposes of limitation, and are not limited to an order of the operations in the flowcharts of FIG. 2. According to other exemplary embodiments, some operations may be skipped or added, and an order of some operations may be changed.

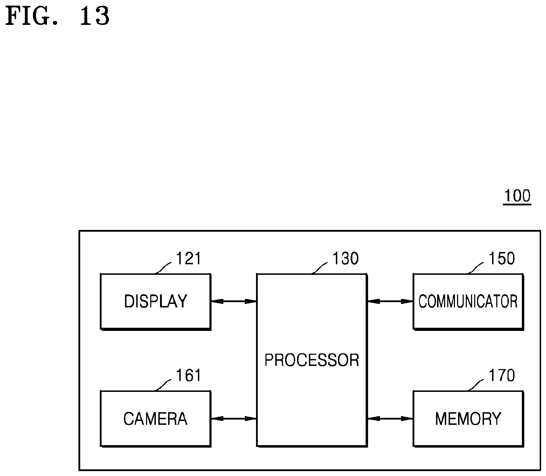

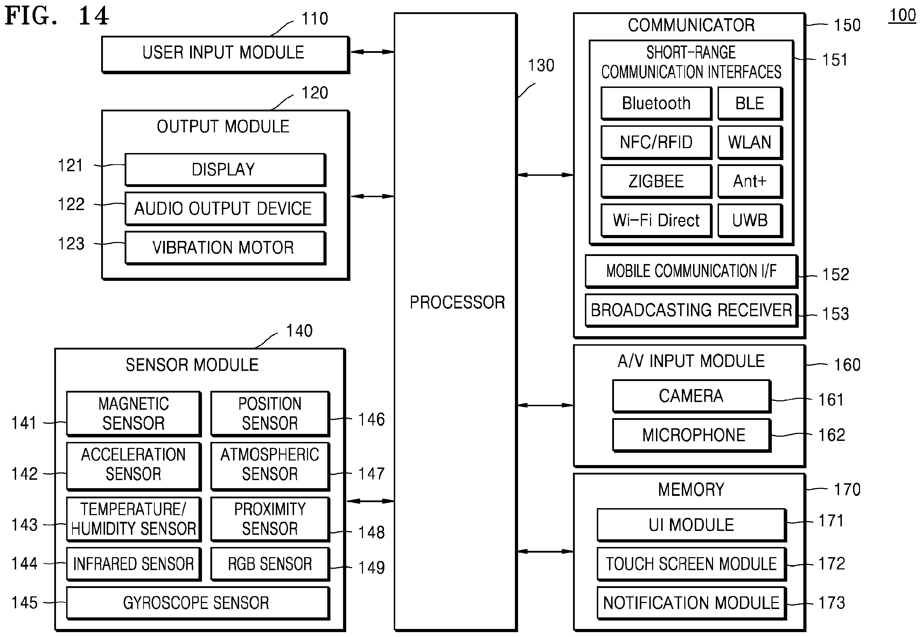

FIGS. 13 and 14 are block diagrams of the device 100 according to an exemplary embodiment of the present invention.

Referring to FIG. 13, the device 100 may include the display 121, a camera 161, a communicator 150, a memory 170, and the processor 130. However, all of the illustrated components are not essential. The first device 100 may be implemented by more or less components than those illustrated in FIG. 13.

For example, as illustrated in FIG. 14, the device 100 may further include the sensing unit 140, a user input unit 110, an output unit 120, and an audio/video (A/V) input unit 160, in addition to the camera 161, the communicator 150, the display 121, and the processor 130.

The aforementioned components will now be described in detail.

The user input unit 110 denotes a unit via which a user inputs data for controlling the device 100. For example, the user input unit 110 may be, but not limited to, a key pad, a dome switch, a touch pad (e.g., a capacitive overlay type, a resistive overlay type, an infrared beam type, an integral strain gauge type, a surface acoustic wave type, a piezo electric type, or the like), a jog wheel, or a jog switch.

The user input unit 110 may include an external device that may transmit a control signal via wired/wireless communication through the communicator 150. For example, the user input unit 110 may be a mouse, a keyboard, or a remote controller.

The user input unit 110 may receive a user input by being controlled by the processor 130. For example, the user input unit 110 may receive a user input that selects one of a plurality of windows displayed on the display 121.

The output unit 120 outputs an audio signal, a video signal, or a vibration signal under the control of the processor 130, and may include the display 121, an audio output unit 122, and a vibration motor 123.

The display 121 displays information that is processed in the device 100, under the control of the processor 130.

For example, the display 121 may include a plurality of windows that constitute a multi-window. The display 121 may change the number of the plurality of windows and display the windows.

The display 121 may enlarge or reduce the size of the windows and display enlarged or reduced windows, by being controlled by the processor 130. The display 121 may rearrange and display the plurality of windows, by being controlled by the processor 130.

When the display 121 forms a layer structure together with a touch pad to construct a touch screen, the display 121 may be used as an input device as well as an output device. The display 121 may include at least one of a liquid crystal display (LCD), a thin film transistor-liquid crystal display (TFT-LCD), an organic light-emitting diode (OLED), a flexible display, a 3D display, and an electrophoretic display. According to exemplary embodiments of the device 100, the device 100 may include at least two displays 121. The at least two displays 121 may be disposed to face each other by using a hinge.

The audio output unit 122 may output audio data that is received from the communicator 150 or stored in the memory 170. The audio output unit 122 may also output an audio signal (for example, a call signal receiving sound, a message receiving sound, or a notification sound) related with a function of the device 100. The audio output unit 122 may include, for example, a speaker or a buzzer.

The vibration motor 123 may output a vibration signal. For example, the vibration motor 123 may output a vibration signal corresponding to an output of audio data or video data (for example, a call signal receiving sound or a message receiving sound). The vibration motor 123 may also output a vibration signal when a touch screen is touched.

The processor 130 typically controls all operations of the device 100. For example, the processor 130 may control the user input unit 110, the output unit 120, the sensing unit 140, the communicator 150, the A/V input unit 160, and the like by executing programs stored in the memory 170.

In detail, the processor 130 may determine one of a plurality of windows displayed on the display 121, as a target window.

The processor 130 may determine at least a partial area for acquiring the size of an object displayed on the target window on the display 121.

The processor 130 may acquire the size of an object included in the determined area on the display 121.

The processor 130 may resize and display the target window on the display 121, based on the size of the object. When the size of the object is less than a preset reference, the processor 130 may enlarge the size of the target window and display a size-enlarged target window. When the size of the object is greater than the preset reference, the processor 130 may reduce the size of the target window and display a size-reduced target window.

The processor 130 may determine the target window, based on a user input that is input via the user input unit 110 to select one from among the plurality of windows.

The processor 130 may change the position of the area for acquiring the size of the object, or resize the area, based on the user input made via the user input unit 110.

The processor 130 may acquire the size of text included in the determined area on the display 121, or recognize text from an image included in the determined area and then acquire the size of the recognized text.

The processor 130 may automatically determine whether to resize the target window displayed on the display 121, according to the size of an object acquired based on a predetermined time interval.

The processor 130 may receive, via the user input unit 110, a user input regarding whether to resize the target window displayed on the display 121, according to the size of the object acquired based on the predetermined time interval.

The sensing unit 140 may sense the status of the device 100 or the status of the surrounding of the device 100 and may transmit information corresponding to the sensed status to the processor 130. The sensing unit 140 may include, but is not limited thereto, at least one selected from a magnetic sensor 141, an acceleration sensor 142, a temperature/humidity sensor 143, an infrared sensor 144, a gyroscope sensor 145, a position sensor (e.g., a GPS) 146, a pressure sensor 147, a proximity sensor 148, and an RGB sensor 149 (i.e., an illumination sensor). Functions of most of the sensors would be instinctively understood by one of ordinary skill in the art in view of their names and thus detailed descriptions thereof will be omitted herein.

The sensing unit 140 may include a sensor for sensing a touch input made via an input tool, and a sensor for sensing a touch input made by a user. In this case, the sensor for sensing the touch input by the user may be included in the touch screen or the touch pad. The sensor for sensing the touch input via the input tool may be formed below or in the touch screen or the touch pad.

The sensing unit 140 may acquire a distance by which a user is away from the device 100. For example, the sensing unit 140 may include an infrared sensor 144. In other words, the processor 130 may recognize a user who is within a predetermined distance from the device 100, via the infrared sensor 144.

The communicator 150 may include at least one component that enables the device 100 to perform data communication with an external device or a server (not shown). For example, the communicator 150 may include a short-range wireless communication unit 151, a mobile communication unit 152, and a broadcasting reception unit 153.

The short-range wireless communication unit 151 may include, but is not limited to, a Bluetooth communicator, a Bluetooth Low Energy (BLE) communicator, a near field communication (NFC) unit, a wireless local area network (WLAN) (e.g., Wi-Fi) communicator, a ZigBee communicator, an infrared Data Association (IrDA) communicator, a Wi-Fi direct (WFD) communicator, an ultra wideband (UWB) communicator, an Ant+ communicator, and the like.

The mobile communication unit 152 may exchange a wireless signal with at least one selected from a base station, an external terminal, and a server on a mobile communication network. Examples of the wireless signal may include a voice call signal, a video call signal, and various types of data generated during a short message service (SMS)/multimedia messaging service (MMS).

The broadcasting reception unit 153 receives a broadcasting signal and/or broadcasting-related information from an external source via a broadcasting channel. The broadcasting channel may be a satellite channel, a ground wave channel, or the like. According to exemplary embodiments, the device 100 may not include the broadcasting reception unit 153.

The A/V input unit 160 inputs an audio signal or a video signal, and may include, for example, the camera 161 and a microphone 162. The camera 161 may acquire an image frame, such as a still image or a moving picture, via an image sensor in a video call mode or a photography mode. An image captured via the image sensor may be processed by the processor 130 or a separate image processor (not shown).

The image frame obtained by the camera 161 may be stored in the memory 170 or transmitted to the outside via the communicator 150. At least two cameras 161 may be included according to embodiments of the structure of a device.

The processor 130 may recognize a user from the image captured by the camera 161 and extract a distance by which a user is away from the device 100.

The microphone 162 receives an external audio signal and converts the external audio signal into electrical audio data. For example, the microphone 162 may receive an audio signal from an external device or a speaking person. The microphone 162 may use various noise removal algorithms in order to remove noise that is generated while receiving the external audio signal.

The memory 170 may store a program that is used by the processor 130 to perform processing and control, or may store input/output data.

The memory 170 may include at least one type of storage medium selected from among a flash memory type, a hard disk type, a multimedia card micro type, a card type memory (for example, a secure digital (SD) or extreme digital (XD) memory), a random access memory (RAM), a static random access memory (SRAM), a read-only memory (ROM), an electrically erasable programmable ROM (EEPROM), a programmable ROM (PROM), magnetic memory, a magnetic disk, and an optical disk. The device 100 may operate a web storage or a cloud server on the internet which performs a storage function of the memory 170.

The programs stored in the memory 170 may be classified into a plurality of modules according to their functions, for example, a UI module 171, a touch screen module 172, and a notification module 173.

The UI module 171 may provide a UI, GUI, or the like that is specialized for each application and interoperates with the device 100. The touch screen module 172 may detect a touch gesture on a touch screen of a user and transmit information regarding the touch gesture to the processor 130. The touch screen module 172 according to an exemplary embodiment of the present invention may recognize and analyze a touch code. The touch screen module 172 may be configured by separate hardware including a controller.

In order to detect the actual touch or the proximate touch on the touch pad, the touch screen may internally or externally have various sensors. An example of a sensor used to detect the real touch or the proximity touch on the touch screen is a tactile sensor. The tactile sensor denotes a sensor that detects a touch by a specific object to a degree to which a human feels or more. The tactile sensor may detect various types of information, such as the roughness of a touched surface, the hardness of the touching object, the temperature of a touched point, and the like.

Another example of a sensor used to detect the real touch or the proximity touch on the touch screen is a proximity sensor. The proximity sensor is a sensor that detects the existence of an object that approaches a predetermined detection surface or that exists nearby, by using an electromagnetic force or infrared rays, without using any mechanical contact. Examples of the proximity sensor include a transmission-type photoelectric sensor, a direct reflection-type photoelectric sensor, a mirror reflection-type photoelectric sensor, a high frequency oscillation-type proximity sensor, a capacity-type proximity sensor, a magnetic proximity sensor, an infrared-type proximity sensor, or the like. Examples of the touch gesture of the user may include tap, touch and hold, double tap, drag, panning, flick, drag and drop, swipe, and the like.

The notification module 173 may generate a signal for notifying that an event has been generated in the device 100. Examples of the event generated in the device 100 may include call signal receiving, message receiving, a key signal input, schedule notification, and the like. The notification module 173 may output a notification signal in the form of a video signal via the display 121, in the form of an audio signal via the audio output unit 122, or in the form of a vibration signal via the vibration motor 123.

The present invention can also be embodied as a storage medium including instruction codes executable by a computer such as a program module executed by the computer. A computer readable medium can be any usable medium which can be accessed by the computer and includes all volatile/non-volatile and removable/non-removable media. Further, the computer readable medium may include all computer storage and communication media. The computer storage medium includes all volatile/non-volatile and removable/non-removable media embodied by a certain method or technology for storing information such as computer readable instruction code, a data structure, a program module or other data. The communication medium typically includes the computer readable instruction code, the data structure, the program module, or other data of a modulated data signal such as a carrier wave, or other transmission mechanism, and includes any information transmission medium.

The terminology "-unit" used herein may be a hardware component such as a processor or a circuit, and/or a software component that is executed by a hardware component such as a processor.

Although a few preferred embodiments have been shown and described, it will be appreciated by those skilled in the art that various changes and modifications might be made without departing from the scope of the invention, as defined in the appended claims.

The exemplary embodiments should be considered in descriptive sense only and not for purposes of limitation. Descriptions of features or aspects within each exemplary embodiment should typically be considered as available for other similar features or aspects in other exemplary embodiments.

Attention is directed to all papers and documents which are filed concurrently with or previous to this specification in connection with this application and which are open to public inspection with this specification.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims and drawings) may be replaced by alternative features serving the same, equivalent or similar purpose, unless expressly stated otherwise. Thus, unless expressly stated otherwise, each feature disclosed is one example only of a generic series of equivalent or similar features.

## Claims

1. A device (100) comprising:
a display (121); and
a processor (130) configured to:
display a plurality of windows on the display, the plurality of windows corresponding to a plurality of executed applications respectively;
determine one of the plurality of windows as a target window (S101),
determine at least a partial area for acquiring a size of an object displayed in the target window (S102),
acquire a size of the object included in the determined at least partial area (S103), and
determine whether to resize the object and the target window comprising the object, based on comparing the acquired size of the object and a preset reference size;
wherein in response to the acquired size of the object being less than the preset reference size (S601), the processor (130) is configured to enlarge a size of the object and the target window, display the enlarged object in the enlarged target window, and reduce in size remaining windows of the plurality of windows and respective objects displayed therein and rearrange the remaining windows of the plurality of windows; and
wherein in response to the acquired size of the object being greater than the preset reference (S601), the processor (130) is configured to reduce the size of the object and the target window, display the reduced object in the reduced target window, and enlarge in size the remaining windows of the plurality of windows and the respective objects displayed therein and rearrange the remaining windows of the plurality of windows.

2. The device (100) of claim 1, wherein the processor (130) is configured to determine the target window (S101) based on a user input of selecting one from among the plurality of windows, and/or wherein the processor (130) is configured to determine the at least partial area for acquiring the size of the object (S102), based on an area including text in the target window.

3. The device (100) of any preceding claim, wherein the processor (130) is configured to change a position or a size of the at least partial area for acquiring the size of the object, based on a user input, optionally wherein, when the position or size of the at least partial area for acquiring the size of the object has been changed, the processor (130) is configured to reacquire the size of the object.

4. The device (100) of any preceding claim, wherein the object is text and the processor (130) is configured to acquire the size of text included in the determined at least partial area, or to recognize text from an image included in the determined at least partial area and then to acquire a size of the recognized text.

5. The device (100) of any preceding claim, wherein the processor (130) is configured to acquire the size of the object, based on a predetermined time interval (S901), optionally wherein the processor is configured to automatically determine whether to resize the target window, according to the size of the object (S103) acquired based on the predetermined time interval (S902), optionally wherein the processor is configured to receive a user input regarding whether to resize the target window, according to the size of the object acquired, based on the predetermined time interval (S903).

6. The device (100) of any preceding claim, wherein
the processor (130) is configured to determine a ratio for resizing the target window, based on preset user information, and
the preset user information comprises at least one of age information, eyesight information, and size information of a preferred window, and/or
wherein the device (100) further comprises a sensing unit (140) configured to acquire a distance by which a user is away from the device,
wherein the processor (130) is configured to determine a ratio for resizing the target window, based on the distance.

7. A method comprising:
displaying a plurality of windows on a display, the plurality of windows corresponding to a plurality of executed applications respectively;
determining one of the plurality of windows as a target window (S101);
determining at least a partial area for acquiring a size of an object displayed in the target window (S102);
acquiring a size of the object included in the determined at least partial area (S103); and
determining whether to resize the object and the target window comprising the object, based on comparing the acquired size of the object and a preset reference size;
wherein in response to the acquired size of the object being less than the preset reference size (S601), enlarging a size of the object and the target window, displaying the enlarged object in the enlarged target window, and reducing in size remaining windows of the plurality of windows and respective objects displayed therein and rearranging the remaining windows of the plurality of windows; and
wherein in response to the acquired size of the object being greater than the preset reference (S601), reducing the size of the object and the target window, displaying the reduced object in the reduced target window, and enlarging in size the remaining windows of the plurality of windows and the respective objects displayed therein and rearranging the remaining windows of the plurality of windows.

8. The method of claim 7, wherein the determining as the target window (S101) comprises determining the target window, based on a user input of selecting one from among the plurality of windows.

9. The method of any one of claims 7 or 8, wherein the determining of the at least partial area for acquiring the size of the object (S102) comprises determining the at least partial area for acquiring the size of the object, based on an area including text in the target window.

10. The method of claim any one of claims 7 to 9, wherein the determining of the at least partial area for acquiring the size of the object (S102) comprises changing a position or a size of the at least partial area for acquiring the size of the object, based on a user input, the method optionally further comprising, when the position or size of the at least partial area for acquiring the size of the object has been changed, reacquiring the size of the object.

11. The method of any one of claims 7 to 10, wherein the object is text and wherein acquiring of the size of the object (S103) comprises acquiring the size of text included in the determined at least partial area, or recognizing text from an image included in the determined at least partial area and then acquiring a size of the recognized text.

12. The method of any one of claims 7 to 11, wherein the acquiring of the size of the object (S103) comprises acquiring the size of the object, based on a predetermined time interval (S901), optionally wherein the acquiring of the size of the object comprises automatically determining whether to resize the target window, according to the size of the object acquired based on the predetermined time interval (S902), optionally wherein the acquiring of the size of the object comprises receiving a user input regarding whether to resize the target window, according to the size of the object acquired, based on the predetermined time interval (S903).

13. The method of any one of claims 7 to 12, wherein
the resizing of the target window based on the size of the object and displaying of the resized target window (S104) comprises determining a ratio for resizing the target window, based on preset user information, and
the preset user information comprises at least one of age information, eyesight information, and size information of a preferred window and/or
wherein the resizing of the target window based on the size of the object and displaying of the resized target window comprises acquiring a distance by which a user is away from the device, and determining a ratio for resizing the target window, based on the distance.

## Patentansprüche

1. Vorrichtung (100), die Folgendes umfasst:
ein Display (121); und
einen Prozessor (130), der für Folgendes ausgelegt ist:
Anzeigen einer Vielzahl von Fenstern auf dem Display, wobei die Vielzahl von Fenstern jeweils einer Vielzahl von ausgeführten Applikationen entspricht;
Bestimmen eines der Vielzahl von Fenstern als ein Zielfenster (S101),
Bestimmen mindestens einer teilweise Fläche zum Akquirieren einer Größe eines Objekts, das im Zielfenster angezeigt wird (S102),
Akquirieren einer Größe des Objekts, das in der bestimmten mindestens teilweise Fläche enthalten ist (S103), und Bestimmen, ob das Objekt und das Zielfenster, welches das Objekt enthält, auf der Basis des Vergleichens der akquirierten Größe des Objekts und einer voreingestellten Referenzgröße zu skalieren ist;
wobei als Reaktion darauf, dass die akquirierte Größe des Objekts kleiner als die voreingestellte Referenzgröße ist (S601), der Prozessor (130) dazu ausgelegt ist, eine Größe des Objekts und des Zielfensters zu vergrößern, das vergrößerte Objekt in dem vergrößerten Zielfenster anzuzeigen, und die Größe der restlichen Fenster der Vielzahl von Fenstern und der darin angezeigten jeweiligen Objekte zu verkleinern und die restlichen Fenster der Vielzahl von Fenstern umzuordnen; und
wobei als Reaktion darauf, dass die akquirierte Größe des Objekts größer als die voreingestellte Referenzgröße ist (S601), der Prozessor (130) dazu ausgelegt ist, die Größe des Objekts und des Zielfensters zu verkleinern, das verkleinerte Objekt in dem verkleinerten Zielfenster anzuzeigen, und die Größe der restlichen Fenster der Vielzahl von Fenstern und der darin angezeigten jeweiligen Objekte zu vergrößern und die restlichen Fenster der Vielzahl von Fenstern umzuordnen.

2. Vorrichtung (100) nach Anspruch 1, wobei der Prozessor (130) dazu ausgelegt ist, das Zielfenster auf der Basis einer Benutzereingabe des Auswählens eines unter der Vielzahl von Fenstern zu bestimmen (S101), und/oder wobei der Prozessor (130) dazu ausgelegt ist, mindestens die teilweise Fläche zum Akquirieren der Größe des Objekts auf der Basis einer Fläche, die Text im Zielfenster enthält, zu bestimmen (S102).

3. Vorrichtung (100) nach einem vorhergehenden Anspruch, wobei der Prozessor (130) dazu ausgelegt ist, eine Position oder eine Größe der mindestens teilweise Fläche zum Akquirieren der Größe des Objekts auf der Basis einer Benutzereingabe zu ändern, und optional wobei, wenn die Position oder Größe der mindestens teilweise Fläche zum Akquirieren der Größe des Objekts geändert worden ist, der Prozessor (130) dazu ausgelegt ist, die Größe des Objekts erneut zu akquirieren.

4. Vorrichtung (100) nach einem vorhergehenden Anspruch, wobei das Objekt Text ist und der Prozessor (130) dazu ausgelegt ist, die Größe des in der mindestens teilwiese Fläche enthaltenen Textes zu akquirieren, oder Text von einem Bild zu erkennen, das in der bestimmten mindestens teilweise Fläche enthalten ist, und dann eine Größe des erkannten Textes zu akquirieren.

5. Vorrichtung (100) nach einem vorhergehenden Anspruch, wobei der Prozessor (130) dazu ausgelegt ist, die Größe des Objekts auf der Basis eines vorbestimmten Zeitintervalls zu akquirieren (S901), optional wobei der Prozessor dazu ausgelegt ist, automatisch zu bestimmen, ob das Zielfenster entsprechend der Größe des Objekts, die auf der Basis des vorbestimmten Zeitintervalls akquiriert wurde (S902), zu skalieren ist (S103), optional wobei der Prozessor dazu ausgelegt ist, eine Benutzereingabe hinsichtlich dessen, ob das Zielfenster entsprechend der akquirierten Größe des Objekts auf der Basis des vorbestimmten Zeitintervalls zu skalieren ist, zu empfangen (S903).

6. Vorrichtung (100) nach einem vorhergehenden Anspruch, wobei
der Prozessor (130) dazu ausgelegt ist, ein Verhältnis zum Skalieren des Zielfensters auf der Basis von voreingestellten Benutzerinformationen zu bestimmen, und
die voreingestellten Benutzerinformationen zumindest ein Element von Altersinformationen, Sehkraftinformationen und Größeninformationen eines bevorzugten Fensters umfassen, und/oder
wobei die Vorrichtung (100) ferner eine Sensoreinheit (140) umfasst, die dazu ausgelegt ist, einen Abstand zu akquirieren, um den ein Benutzer von der Vorrichtung entfernt ist,
wobei der Prozessor (130) dazu ausgelegt ist, ein Verhältnis zum Skalieren des Zielfensters auf der Basis des Abstands zu bestimmen.

7. Verfahren, das Folgendes umfasst:
Anzeigen einer Vielzahl von Fenstern auf einem Display, wobei die Vielzahl von Fenstern jeweils einer Vielzahl von ausgeführten Applikationen entspricht;
Bestimmen eines der Vielzahl von Fenstern als ein Zielfenster (S101),
Bestimmen einer mindestens teilweise Fläche zum Akquirieren einer Größe eines Objekts, das im Zielfenster angezeigt wird (S102),
Akquirieren einer Größe des Objekts, das in der bestimmten mindestens teilweise Fläche enthalten ist (S103), und
Bestimmen, ob das Objekt und das Zielfenster, welches das Objekt enthält, auf der Basis des Vergleichens der akquirierten Größe des Objekts und einer voreingestellten Referenzgröße zu skalieren ist, wobei als Reaktion darauf, dass die akquirierte Größe des Objekts kleiner als die voreingestellte Referenzgröße ist (S601), eine Größe des Objekts und des Zielfensters vergrößert wird, das vergrößerte Objekt in dem vergrößerten Zielfenster angezeigt wird, und die Größe der restlichen Fenster der Vielzahl von Fenstern und der darin angezeigten jeweiligen Objekte verkleinert wird und die restlichen Fenster der Vielzahl von Fenstern umgeordnet werden; und
wobei als Reaktion darauf, dass die akquirierte Größe des Objekts größer als die voreingestellte Referenzgröße ist (S601), die Größe des Objekts und des Zielfensters verkleinert wird, das verkleinerte Objekt in dem verkleinerten Zielfenster angezeigt wird, und die Größe der restlichen Fenster der Vielzahl von Fenstern und der darin angezeigten jeweiligen Objekte vergrößert wird und die restlichen Fenster der Vielzahl von Fenstern umgeordnet werden.

8. Verfahren nach Anspruch 7, wobei das Bestimmen als das Zielfenster (S101) das Bestimmen des Zielfensters auf der Basis einer Benutzereingabe des Auswählens eines unter der Vielzahl von Fenstern umfasst.

9. Verfahren nach einem der Ansprüche 7 oder 8, wobei das Bestimmen der mindestens teilweise Fläche zum Akquirieren der Größe des Objekts (S102) das Bestimmen der mindestens teilweise Fläche zum Akquirieren der Größe des Objekts auf der Basis einer Fläche umfasst, die Text im Zielfenster enthält.

10. Verfahren nach einem der Ansprüche 7 bis 9, wobei das Bestimmen der mindestens teilweise Fläche zum Akquirieren der Größe des Objekts (S102) das Ändern einer Position oder einer Größe der mindestens teilweise Fläche zum Akquirieren der Größe des Objekts auf der Basis einer Benutzereingabe umfasst, wobei das Verfahren optional ferner das erneute Akquirieren der Größe des Objekts umfasst, wenn die Position oder Größe der mindestens teilweise Fläche zum Akquirieren der Größe des Objekts geändert worden ist.

11. Verfahren nach einem der Ansprüche 7 bis 10, wobei das Objekt Text ist, und wobei das Akquirieren der Größe des Objekts (S103) das Akquirieren der Größe des Textes, der in der bestimmten mindestens teilweise Fläche enthalten ist, oder das Erkennen von Text von einem Bild, das in der bestimmten mindestens teilweise Fläche enthalten ist, und dann Akquirieren einer Größe des erkannten Textes umfasst.

12. Verfahren nach einem der Ansprüche 7 bis 11, wobei das Akquirieren der Größe des Objekts (S103) das Akquirieren der Größe des Objekts auf der Basis eines vorbestimmten Zeitintervalls umfasst (S901), optional wobei das Akquirieren der Größe des Objekts das automatische Bestimmen umfasst, ob das Zielfenster entsprechend der Größe des Objekts, die auf der Basis des vorbestimmten Zeitintervalls akquiriert wurde (S902), zu skalieren ist, optional wobei das Akquirieren der Größe des Objekts das Empfangen einer Benutzereingabe hinsichtlich dessen umfasst, ob das Zielfenster entsprechend der akquirierten Größe des Objekts auf der Basis des vorbestimmten Zeitintervalls zu skalieren ist (S903).

13. Verfahren nach einem der Ansprüche 7 bis 12, wobei das Skalieren des Zielfensters auf der Basis der Größe des Objekts und das Anzeigen des skalierten Zielfensters (S104) das Bestimmen eines Verhältnisses zum Skalieren des Zielfensters auf der Basis von voreingestellten Benutzerinformationen umfasst, und die voreingestellten Benutzerinformationen zumindest ein Element von Altersinformationen, Sehkraftinformationen und Größeninformationen eines bevorzugten Fensters umfassen, und/oder wobei das Skalieren des Zielfensters auf der Basis der Größe des Objekts und das Anzeigen des skalierten Zielfensters das Akquirieren eines Abstands, um den ein Benutzer von der Vorrichtung entfernt ist, und das Bestimmen eines Verhältnisses zum Skalieren des Zielfensters auf der Basis des Abstands umfasst.

## Revendications

1. Dispositif (100) comprenant :
un afficheur (121) ; et
un processeur (130) configuré pour :
afficher une pluralité de fenêtres sur l'afficheur, la pluralité de fenêtres correspondant respectivement à une pluralité d'applications exécutées ;
déterminer l'une de la pluralité de fenêtres en tant que fenêtre cible (S101),
déterminer au moins une zone partielle permettant d'acquérir une taille d'un objet affiché dans la fenêtre cible (S102),
acquérir une taille de l'objet contenu dans la zone au moins partielle déterminée (S103), et
déterminer s'il faut redimensionner l'objet et la fenêtre cible contenant l'objet, sur la base d'une comparaison entre la taille acquise de l'objet et une taille de référence prédéfinie ;
dans lequel, en réponse au fait que la taille acquise de l'objet est inférieure à la taille de référence prédéfinie (S601), le processeur (130) est configuré pour agrandir une taille de l'objet et de la fenêtre cible, afficher l'objet agrandi dans la fenêtre cible agrandie et pour réduire la taille des fenêtres restantes de la pluralité de fenêtres et d'objets respectifs qui y affichés et réorganiser les fenêtres restantes de la pluralité de fenêtres ; et
dans lequel, en réponse au fait que la taille acquise de l'objet est supérieure à la référence prédéfinie (S601), le processeur (130) est configuré pour réduire la taille de l'objet et de la fenêtre cible, afficher l'objet réduit dans la fenêtre cible réduite, et agrandir la taille des fenêtres restantes de la pluralité de fenêtres et des objets respectifs qui y sont affichés et réorganiser les fenêtres restantes de la pluralité de fenêtres.

2. Dispositif (100) selon la revendication 1, dans lequel le processeur (130) est configuré pour déterminer la fenêtre cible (S101) sur la base d'une entrée utilisateur consistant à en sélectionner une parmi la pluralité de fenêtres, et/ou dans lequel le processeur (130) est configuré pour déterminer la zone au moins partielle permettant d'acquérir la taille de l'objet (S102) sur la base d'une zone contenant du texte dans la fenêtre cible.

3. Dispositif (100) selon l'une quelconque des revendications précédentes, dans lequel le processeur (130) est configuré pour modifier une position ou une taille de la zone au moins partielle permettant d'acquérir la taille de l'objet sur la base d'une entrée utilisateur et facultativement dans lequel, lorsque la position ou la taille de la zone au moins partielle permettant d'acquérir la taille de l'objet a été modifiée, le processeur (130) est configuré pour acquérir de nouveau la taille de l'objet.

4. Dispositif (100) selon l'une quelconque des revendications précédentes, dans lequel l'objet est du texte et le processeur (130) est configuré pour acquérir la taille du texte contenu dans la zone au moins partielle déterminée, ou pour reconnaître du texte dans une image contenue dans la zone au moins partielle déterminée puis pour acquérir une taille du texte reconnu.

5. Dispositif (100) selon l'une quelconque des revendications précédentes, dans lequel le processeur (130) est configuré pour acquérir la taille de l'objet sur la base d'un intervalle de temps prédéterminé (S901),
et facultativement dans lequel le processeur est configuré pour déterminer automatiquement s'il faut redimensionner la fenêtre cible, conformément à la taille de l'objet (S103) acquis sur la base de l'intervalle de temps prédéterminé (S902), et facultativement dans lequel le processeur est configuré pour recevoir une entrée utilisateur concernant le fait de savoir s'il faut redimensionner la fenêtre cible, conformément à la taille de l'objet acquis, sur la base de l'intervalle de temps prédéterminé (S903).

6. Dispositif (100) selon l'une quelconque des revendications précédentes, dans lequel
le processeur (130) est configuré pour déterminer un rapport de redimensionnement de la fenêtre cible sur la base d'informations utilisateur prédéfinies, et
les informations utilisateur prédéfinies comprennent au moins l'une d'une information d'âge, d'une information de vision oculaire et d'une information de taille d'une fenêtre préférée, et/ou
dans lequel le dispositif (100) comprend en outre une unité de détection (140) configurée pour acquérir une distance d'éloignement d'un utilisateur par rapport au dispositif,
dans lequel le processeur (130) est configuré pour déterminer un rapport de redimensionnement de la fenêtre cible sur la base de la distance.

7. Procédé comprenant les étapes consistant à :
afficher une pluralité de fenêtres sur un afficheur, la pluralité de fenêtres correspondant respectivement à une pluralité d'applications exécutées ;
déterminer l'une de la pluralité de fenêtres en tant que fenêtre cible (S101) ;
déterminer au moins une zone partielle permettant d'acquérir une taille d'un objet affiché dans la fenêtre cible (S102) ;
acquérir une taille de l'objet contenu dans la zone au moins partielle déterminée (S103) ; et
déterminer s'il faut redimensionner l'objet et la fenêtre cible contenant l'objet sur la base d'une comparaison entre la taille acquise de l'objet et une taille de référence prédéfinie ;
dans lequel, en réponse au fait que la taille acquise de l'objet est inférieure à la taille de référence prédéfinie (S601), on agrandit une taille de l'objet et de la fenêtre cible, on affiche l'objet agrandi dans la fenêtre cible agrandie, et on réduit la taille des fenêtres restantes de la pluralité de fenêtres et d'objets respectifs qui y sont affichés et on réorganise les fenêtres restantes de la pluralité de fenêtres ; et
dans lequel, en réponse au fait que la taille acquise de l'objet est supérieure à la référence prédéfinie (S601), on réduit la taille de l'objet et de la fenêtre cible, on affiche l'objet réduit dans la fenêtre cible réduite, et on agrandit la taille des fenêtres restantes de la pluralité de fenêtres et des objets respectifs qui y sont affichés et on réorganise les fenêtres restantes de la pluralité de fenêtres.

8. Procédé selon la revendication 7, dans lequel la détermination en tant que fenêtre cible (S101) consiste à déterminer la fenêtre cible sur la base d'une entrée utilisateur consistant à en sélectionner une parmi la pluralité de fenêtres.

9. Procédé selon l'une quelconque des revendications 7 ou 8, dans lequel la détermination de la zone au moins partielle permettant d'acquérir la taille de l'objet (S102) consiste à déterminer la zone au moins partielle permettant d'acquérir la taille de l'objet sur la base d'une zone contenant du texte dans la fenêtre cible.

10. Procédé selon l'une quelconque des revendications 7 à 9, dans lequel la détermination de la zone au moins partielle permettant d'acquérir la taille de l'objet (S102) consiste à modifier une position ou une taille de la zone au moins partielle permettant d'acquérir la taille de l'objet sur la base d'une entrée utilisateur, le procédé consistant en outre facultativement, lorsque la position ou la taille de la zone au moins partielle permettant d'acquérir la taille de l'objet a été modifiée, à acquérir à nouveau la taille de l'objet.

11. Procédé selon l'une quelconque des revendications 7 à 10, dans lequel l'objet est du texte et dans lequel l'acquisition de la taille de l'objet (S103) consiste à acquérir la taille du texte contenu dans la zone au moins partielle déterminée, ou à reconnaître du texte dans une image contenue dans la zone au moins partielle déterminée puis à acquérir une taille du texte reconnu.

12. Procédé selon l'une quelconque des revendications 7 à 11, dans lequel l'acquisition de la taille de l'objet (S103) consiste à acquérir la taille de l'objet sur la base d'un intervalle de temps prédéterminé (S901), et facultativement dans lequel l'acquisition de la taille de l'objet consiste à déterminer automatiquement s'il faut redimensionner la fenêtre cible, conformément à la taille de l'objet acquis sur la base de l'intervalle de temps prédéterminé (S902),
dans lequel l'acquisition de la taille de l'objet consiste à recevoir une entrée utilisateur concernant le fait de savoir s'il faut redimensionner la fenêtre cible, conformément à la taille de l'objet acquis, sur la base de l'intervalle de temps prédéterminé (S903).

13. Procédé selon l'une quelconque des revendications 7 à 12, dans lequel
le redimensionnement de la fenêtre cible sur la base de la taille de l'objet et l'affichage de la fenêtre cible redimensionnée (S104) consistent à déterminer un rapport de redimensionnement de la fenêtre cible sur la base d'informations utilisateur prédéfinies, et
les informations utilisateur prédéfinies comprennent au moins une information d'âge, une information de vision oculaire et une information de taille d'une fenêtre préférée et/ou
dans lequel le redimensionnement de la fenêtre cible sur la base de la taille de l'objet et l'affichage de la fenêtre cible redimensionnée consistent à acquérir une distance d'éloignement d'un utilisateur par rapport au dispositif, et à déterminer un rapport de redimensionnement de la fenêtre cible sur la base de la distance.
